# EUROPÄISCHE PATENTSCHRIFT

(11) **EP 0 599 087 B1**
(45) Veröffentlichungstag und Bekanntmachung des Hinweises auf die Patenterteilung: **10.01.1996**
(21) Anmeldenummer: 93117634.1
(22) Anmeldetag: 30.10.1993
(51) Int. Cl.: F16N 7/00, B61K 3/00

(54) **Vorrichtung zum Schmieren und Reinigen insbesondere von Ketten und Schienen**
Device for lubricating and cleaning of chains and rails
Dispositif pour la lubrification et le nettoyage des chaînes et des rails

(30) Priorität: 27.11.1992 DE 4239839
(43) Veröffentlichungstag der Anmeldung: 01.06.1994
(73) Patentinhaber: Satzinger GmbH & Co., D-97717 Euerdorf (DE)
(72) Erfinder: Graf, Walter, Dipl.-Ing., D-97717 Euerdorf (DE)
(74) Vertreter: Andrejewski, Walter, Dr.

(56) Entgegenhaltungen:
- GB-A- 210 645
- US-A- 4 783 186

## Beschreibung

Die Erfindung betrifft eine Vorrichtung zum Schmieren und Reinigen insbesondere von Ketten und Schienen. - Derartige Vorrichtungen bestehen im allgemeinen aus einem Schmierschuh mit Schmierstoffzuführungen und ggf. aus dem zu schmierenden Gegenstand zugewandten Bürsten. Ein solcher Schmierschuh wird über die zu schmierenden Schienen oder Ketten geführt oder beispielsweise Ketten werden durch den Schmierschuh gezogen. An diese Schmierschuhe sind Schmierstoffgeber anschließbar, aus denen ein Schmierstoff im allgemeinen gesteuert freigesetzt wird.

Die bekannte Vorrichtung, von der die Erfindung ausgeht (US-A-50 20 637), besteht aus einem einzelnen zylinderförmigen Schmierschuh, dessen Zylinderwand an einer Seite für die Einführung einer zu schmierenden Fahrradkette oder Motorradkette unterbrochen ist. Zylinderinnenseitig sind drei oder mehr Bürstenkörper verteilt, die jeweils einzeln von dem Schmierschuh abmontierbar sind. Lediglich in einem Bürstenkörper ist eine einzelne Öffnung vorgesehen, an die eine relativ lange Schmierstoffzuführungsleitung angeschlossen ist, die zu einem Schmierstoffgeber führt, der mit einer verhältnismäßig sperrigen Halterung an den Schmierschuh angeschlossen ist. Dieser Schmierstoffgeber muß manuell betätigt werden und auch der gesamte Schmierschuh wird manuell über die zu schmierende Kette geführt. Bei dieser bekannten Vorrichtung ist eine ausreichende und gleichmäßige Schmierstoffverteilung an der zu schmierenden Kette nicht gewährleistet, da dem Schmierschuh nur durch die genannte relativ kleine Öffnung Schmierstoff zugeführt wird, dessen Verteilung auf die Bürsten des gesamten Zylinderumfangs nicht gleichmäßig bzw. nur unvollständig erfolgt. Eine unzureichende Schmierung der Kette wird auch dadurch bedingt, daß der zylinderförmige Schmierschuh in Längsrichtung der zu schmierenden Kette nur verhältnismäßig schmal ist, beispielsweise eine Länge von etwa 1,2 inch (3 cm) hat. Da nur die eine Öffnung für die Schmierstoffzufuhr vorgesehen ist und diese zudem an eine verhältnismäßig lange Schmierstoffzuführungsleitung angeschlossen ist, ist die Gefahr, daß die Schmierstoff zufuhr durch Verstopfungen und dergleichen der Öffnung bzw. der Zufuhrleitung beeinträchtigt wird bzw. völlig ausfällt, verhältnismäßig groß. Im übrigen ist der Aufbau der bekannten Vorrichtung aufwendig und ist auch ihre Handhabung, insbesondere durch die manuelle Betätigung des Schmierstoffgebers, sehr aufwendig. Auch das Abmontieren einer Mehrzahl von Bürstenkörpern, beispielsweise zu Reinigungszwecken, ist aufwendig.

Eine andere bekannte Vorrichtung (US-A-38 23 797) weist einen ringförmigen Schmierschuh auf, wobei der Ring an einer Stelle für die Einführung des zu schmierenden drahtartigen Gegenstandes unterbrochen ist. Für die Schmierstoffzufuhr ist lediglich an einer Stelle des Ringes eine Schmierstoffzufuhrleitung vorgesehen, an die ein automatischer Schmierstoffgeber angeschlossen wird. Der Ring ist für die Schmierstoffverteilung im übrigen als Hohlkörper ausgeführt und weist ringinnenseitig über den Ringumfang verteilte Öffnungen für die Schmierstoffausgabe auf. Nach einer Ausführungsform dieses ringförmigen Schmierschuhs können ringinnenseitig über den Ringumfang verteilt auch einzelne Borstenbündel vorgesehen sein, die trichterförmig den zu schmierenden Gegenstand einschließen. Auch bei dieser bekannten Vorrichtung ist eine ausreichende bzw. gleichmäßige Schmierstoffzufuhr nicht immer gewährleistet, da die Schmierstoffzufuhr nur in einer sehr schmalen ringförmigen Zone erfolgt und nur einzelne Borstenbündel in einer schmalen Reihe über den Ringumfang verteilt sind und außerdem nur eine einzelne Schmierstoff zuleitung an einer Stelle des Ringes vorgesehen ist, die die oben geschilderten Nachteile mit sich bringt. Ein Abmontieren oder Auswechseln der Borstenbündel ist nicht vorgesehen bzw. nicht möglich.

Demgegenüber liegt der Erfindung die Aufgabe zugrunde, eine Vorrichtung anzugeben, die eine effektive und gleichmäßige Schmierstoffverteilung gewährleistet und außerdem gleichzeitig für eine effektive Reinigung eingesetzt werden kann.Die Vorrichtung soll fernerhin auf einfache Weise dem zu schmierenden bzw. zu reinigenden Gegenstand angepaßt werden und sich zugleich durch einen einfachen, wenig aufwendigen Aufbau sowie durch eine wenig aufwendige Handhabung auszeichnen.

Zur Lösung dieser Aufgabe lehrt die Erfindung eine Vorrichtung zum Schmieren und Reinigen insbesondere von Ketten und Schienen, - mit einer Mehrzahl von gleichen Schuhmodulen mit jeweils zwei Modulschenkeln und einem Modulsteg, die innenseitig Aufnahmenuten für das Einsetzen von Bürsten aufweisen und mit einer der Mehrzahl der Schuhmodule entsprechenden Mehrzahl von Bürstenmodulen, die zwei Bürstenschenkel und einen Bürstensteg aus jeweils Bürstenrücken und darin eingelassenen Borstenbündeln aufweisen und die in die Aufnahmenut eingepaßt sind, wobei die Bürstenmodule in die Aufnahmenuten randabgedichtet einsetzbar sind und der Nutengrund der Aufnahmenuten und/oder die Bürstenrücken Schmiermittelverteilerkanäle aufweisen, wobei von den Schmiermittelverteilerkanälen in den Bürstenrücken Schmiermittelbohrungen zu den Borstenbündeln führen und in den Schuhmodulschenkeln sowie in dem Schuhmodulsteg Schmiermittelzuführungsbohrungen angeordnet sind, die mit den Schmiermittelverteilerkanälen in Verbindung stehen, wobei an die Schmiermittelzuführungsbohrungen automatische Schmierstoffgeber angeschlossen sind, und wobei im montierten Zustand der Bürstenmodule die Schmiermittelverteilerkanäle, die Schmiermittelzuführungsbohrungen und die automatischen Schmierstoffgeber ein geschlossenes hydraulisches System bilden, von dem lediglich die Schmiermittelbohrungen, die zu den Borstenbündeln führen, ausgehen. Die Mehrzahl von Schuhmodulen mit zugeordneten Bürstenmodulen wird hintereinander, d. h. Modulschenkel vor Modulschenkel und Modulsteg vor Modulsteg, angeordnet und auf diese Weise zu der erfindungsgemäßen Vorrichtung kombiniert, wie weiter unten ausführlicher erläutert wird. Die Modulschenkel und der Modulsteg sind im Rahmen der Erfindung im wesentlichen U-förmig angeordnet. Zweckmäßigerweise sind die Modulschenkel und der Modulsteg in Form von drei Seiten eines Rechteckes ausgebildet, und dementsprechend ist auch die Aufnahmenut bzw. sind auch die einpaßbaren Bürstenmodule rechteckförmig ausgeführt. Zweckmäßigerweise sind die Bürstenmodule in der Aufnahmenut mit den Schuhmodulen verrastbar. Nach bevorzugter Ausführungsform der Erfindung ist in den beiden Modulschenkeln und in dem Modulsteg des Schuhmoduls jeweils eine Schmiermittelzuführungsbohrung für den Anschluß eines automatischen Schmierstoffgebers vorgesehen. Je nach Bedarf können jeweils auch zwei oder mehr Schmiermittelzuführungsbohrungen vorgesehen sein. Es versteht sich, daß die Schmiermittelzuführungsbohrungen den jeweiligen Schmierstoffgebern angepaßt sind und beispielsweise entsprechende Anschlußgewinde enthalten. Als Schmierstoffgeber zum Anschluß an die Schuhmodule eignen sich im Rahmen der Erfindung insbesondere Schmierstoffgeber, wie sie beispielsweise in der DE-A-38 11 469 beschrieben sind, die den Schmierstoff selbsttätig und funktionssicher gesteuert freisetzen.

Erfindungsgemäß führen von den Schmiermittelverteilerkanälen eine Mehrzahl von Schmiermittelbohrungen in den Bürstenrücken zu den Borstenbündeln. Zweckmäßigerweise weisen Bürstensteg und Bürstenschenkel eine Mehrzahl von Schmiermittelbohrungen auf. Es versteht sich, daß der Fachmann die Dimensionierung, Anordnung und Anzahl der Schmiermittelbohrungen in den Bürstenrücken so wählt, daß die Schmierstoffversorgung in dem gewünschten Ausmaß und an den gewünschten Stellen erfolgt. Dies gilt natürlich auch für die Schmiermittelzuführungsbohrungen in den Schuhmodulen und für die Schmiermittelverteilerkanäle.

Die erfindungsgemäße Gestaltung führt zunächst dazu, daß mit der erfindungsgemäßen Vorrichtung eine ausreichende, geregelte und gleichmäßige Verteilung von Schmierstoff auf die zu schmierende Kette bzw. Schiene möglich ist. Dies wird insbesondere dadurch erreicht, daß sowohl in den Schuhmodulschenkeln als auch in dem Schuhmodulsteg Anschlüsse für automatische Schmierstoffgeber vorhanden sind und der Schmierstoff über die Schmiermittelverteilerkanäle wirksam verteilt und den Schmiermittelbohrungen bzw. den Borstenbündeln zugeführt wird, so daß Schmiermittel von allen Seiten und quasi an allen Stellen auf den zu schmierenden Gegenstand aufgebracht wird. Mit der erfindungsgemäßen Vorrichtung ist auch eine wirksame Reinigung der Ketten bzw. Schienen möglich, indem Borstenbündel der Bürstenmodule zur Schmutzabstreifung dienen. Die erfindungsgemäße Gestaltung der Schuhmodule bedingt weiterhin, daß die Bürstenmodule zu Reinigungs- bzw. Wartungsmaßnahmen einfach und schnell ausgebaut werden können. Auf diese Weise ist auch ein einfaches und schnelles Auswechseln der Bürstenkörper möglich, so daß eine individuelle Anpassung der Schuhmodule an die jeweiligen Verhältnisse bzw. an den zu schmierenden und/oder zu reinigenden Gegenstand problemlos und vor allem zügig möglich ist. In auswechselbaren verschiedenen Bürstenmodulen kann die Borstenbündelanordnung, die Borstenbündellänge und die Borstenbündelhärte den jeweiligen Verhältnissen angepaßt sein. Die erfindungsgemäße Vorrichtung bzw. die zugehörigen Schuhmodule zeichnen sich durch eine wenig aufwendige Bauweise aus sowie durch eine verhältnismäßig einfache Handhabung, insbesondere durch den Einsatz von automatischen Schmierstoffgebern.

Mehrere Schuhmodule können auf einfache Weise zu der erfindungsgemäßen Schmier- und/oder Reinigungsvorrichtung kombiniert werden. Nach bevorzugter Ausführungsform der Erfindung weisen die Schuhmodule plangeformte Stoßflächen und in Längsrichtung der Vorrichtung durchlaufende Bohrungen für Verbindungsschrauben auf, und sind dadurch zu Modulpaketen aus einer beliebigen Anzahl von Schuhmodulen zusammensetzbar. Auf diese Weise läßt sich eine sehr effektive Schmierung bzw. Reinigung insbesondere in Längsrichtung des zu schmierenden bzw. zu reinigenden Gegenstandes erreichen. Es versteht sich, daß die Schmiermittelzuführungsbohrungen der hintereinander gereihten Schuhmodule so angeordnet sind bzw. die zugeordneten Schmierstoffgeber so ausgeführt sind, daß ein problemloser Anschluß der Schmierstoffgeber möglich ist. Es liegt im Rahmen der Erfindung, daß die Schmiermittelzuführungsbohrungen wahlweise durch Stopfenschrauben verschließbar und die entsprechenden Schuhmodule mit den eingesetzten Bürstenmodulen dadurch als Reinigungsbürsten einsetzbar sind. Eine besondere Ausführungsform der Erfindung ist dadurch gekennzeichnet, daß drei Schuhmodule hintereinander angeordnet und zu einem Modulpaket zusammengesetzt sind, wobei nur das mittlere Schuhmodul Schmierstoff enthält und als Schmierschuhmodul wirkt, während die beiden äußeren Schuhmodule zur Reinigung bzw. zur Schmutzabstreifung an der zu schmierenden bzw. zu reinigenden Kette oder Schiene dienen. Die Erfindung ist nicht darauf beschränkt, lediglich Schuhmodule hintereinander anzuordnen und zu einem Modulpaket zusammenzusetzen, sondern es können auch zwei oder mehr Schuhmodule bzw Schuhmodulpakete in bestimmten Abständen nebeneinander angeordnet werden und miteinander verbunden werden, wenn beispielsweise parallel verlaufende Schienen oder Ketten geschmiert und/oder gereinigt werden sollen.

Es liegt im Rahmen der Erfindung, daß an den Schuhmodulen Befestigungseinrichtungen vorgesehen sind für den Anschluß der Schuhmodule an Antriebseinrichtungen für die Bewegung der Vorrichtung über die zu schmierende und/oder zu reinigende Kette oder Schiene. Als solche Befestigungseinrichtungen können ebenfalls in Längsrichtung der Vorrichtung durchlaufende Bohrungen dienen, durch die Schrauben oder dgl. geführt werden können. Es versteht sich, daß auch Sackbohrlöcher als Befestigungseinrichtungen in den Schuhmodulen vorgesehen sein können.

Die Schuhmodule und die Bürstenmodule können im Rahmen der Erfindung aus verschiedenen Materialien bestehen. Vorzugsweise sind die Schuhmodule als Spritzgußteile aus Metall oder Kunststoff ausgeführt.

Nach einer bevorzugten Ausführungsform der Erfindung sind die Bürstenrücken von Bürstensteg und Bürstenschenkeln als einteiliges linear extrudiertes Kunststoff-Formteil ausgeführt, das zwei Gehrungsschnittausnehmungen aufweist und an den Gehrungsschnittflächen passflächig zusammenlegbar ist und in die Aufnahmenut des zugeordneten Schuhmoduls einpaßbar ist. Die in die Bürstenrücken eingelassenen Borstenbündel können aus verschiedenen geeigneten Materialien bestehen, beispielsweise aus Nylon-Fasern oder aus Roßhaar.

Es versteht sich, daß der Fachmann die Dimensionierung der gesamten Vorrichtung bzw. der einzelnen Schuhmodule und Bürstenmodule den jeweiligen Verhältnissen bzw. dem zu schmierenden und/oder zu reinigenden Gegenstand anpaßt.

Im folgenden wird die Erfindung anhand einer lediglich ein Ausführungsbeispiel darstellenden Zeichnung ausführlicher erläutert. Es zeigen in schematischer Darstellung
- Fig. 1: eine Draufsicht auf ein erfindungsgemäßes Schuhmodul mit eingepaßtem Bürstenmodul für die erfindungsgemäße Vorrichtung,
- Fig. 2: eine perspektivische Darstellung eines erfindungsgemäßen Schuhmoduls,
- Fig. 3: eine Seitenansicht eines zunächst als lineares Bauteil gefertigten Bürstenmoduls vor dem Zusammenlegen zu einem in die Aufnahmenut des erfindungsgemäßen Schuhmoduls einpaßbaren Bürstenmodul,
- Fig. 4: eine perspektivische Darstellung eines erfindungsgemäßen, in die Aufnahmenut eines Schuhmoduls einpaßbaren Bürstenmoduls,
- Fig. 5: eine perspektivische Darstellung der erfindungsgemäßen Vorrichtung in Form dreier hintereinander geschalteter Schuhmodule mit Bürstenmodulen zu einer kombinierten Schmier- und Reinigungsvorrichtung.

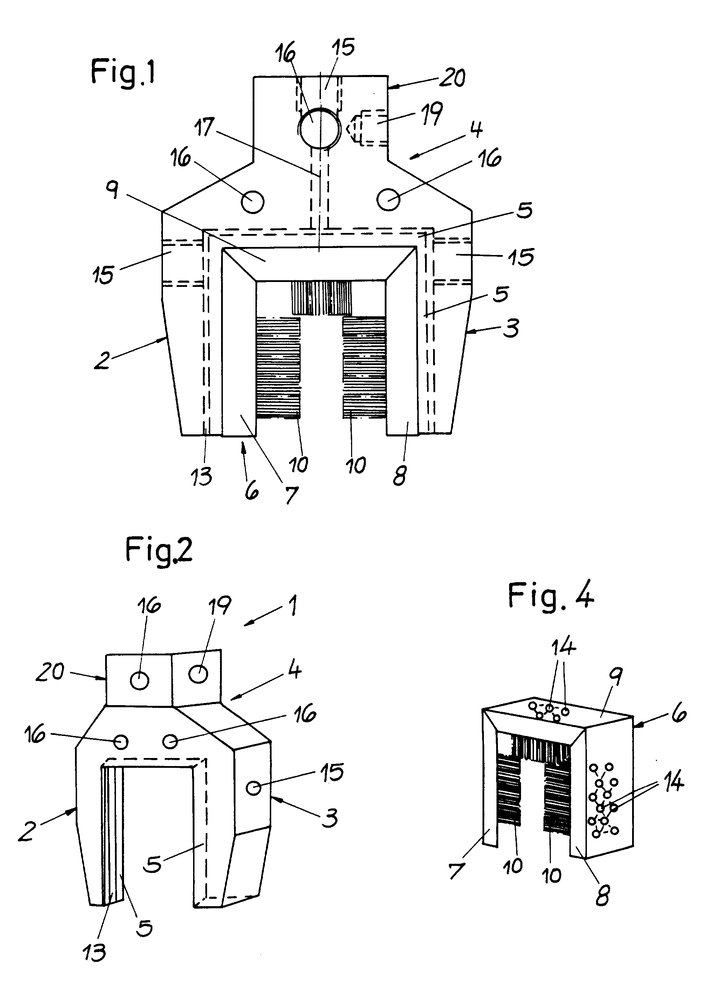

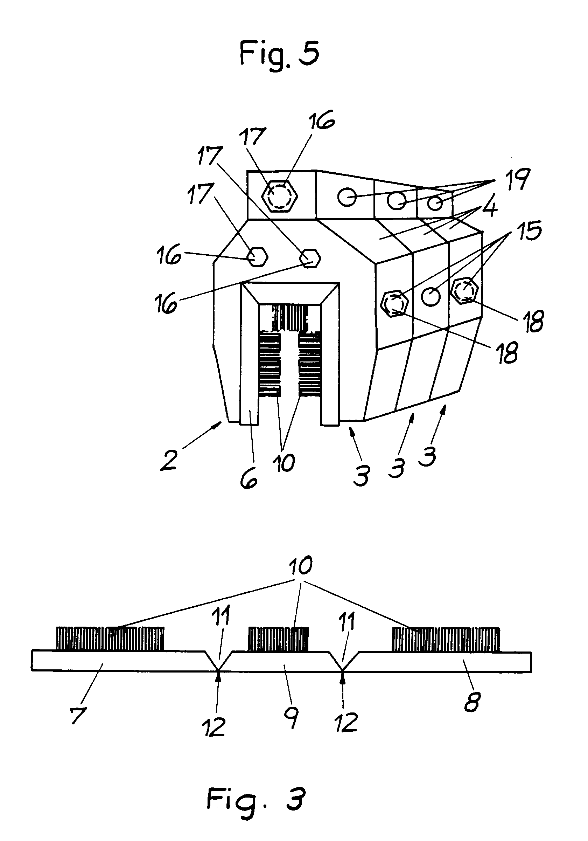

Die erfindungsgemäße Vorrichtung dient zum Schmieren und Reinigen insbesondere von Ketten und Schienen. Fig. 5 zeigt ein Ausführungsbeispiel dieser Vorrichtung, die aus einer Mehrzahl von gleichen Schuhmodulen 1 zusammengesetzt ist, wie die Figuren 1 und 2 verdeutlichen, besteht ein Schuhmodul 1 aus zwei Modulschenkeln 2, 3 und einem Modulsteg 4, die innenseitig Aufnahmenuten 5 für das Einsetzen von Bürstenmodulen 6 aufweisen. Die den Schuhmodulen 1 zugeordneten Bürstenmodulte 6 sind insbesondere in der Fig. 4 sowie in der Fig. 3 dargestellt. Ein Bürstenmodul 6 weist zwei Bürstenschenkel 7, 8 sowie einen Bürstensteg 9 auf. Die Figuren 1, 3 und 4 zeigen, daß die Bürstenschenkel 7, 8 und der Bürstensteg 9 aus jeweils Bürstenrücken und darin eingelassenen Borstenbündeln 10 bestehen. Die Bürstenmodule 6 sind in die Aufnahmenuten 5 der Schuhmodule 1 eingepaßt, wie die Figuren 1 und 5 verdeutlichen. Nach bevorzugter Ausführungsform der Erfindung und im Ausführungsbeispiel sind die Aufnahmenuten 5 des Schuhmoduls 1 sowie die Bürstenschenkel 7, 8 und der Bürstensteg 9 der Bürstenmodule 6 in Form von drei Seiten eines Rechtecks angeordnet. Auf diese Weise ist ein problemloser Einsatz der Bürstenmodule 6 in die Aufnahmenuten 5 der Schuhmodule 1 möglich. Nach bevorzugter Ausführungsform der Erfindung kann ein Bürstenmodul 6 vor dem Einsetzen in ein Schuhmodul 1 als lineares Bauteil ausgeführt sein, daß zwei Gehrungsschnittausnehmungen 11 aufweist. Die Bürstenschenkel 8 und der Bürstensteg 9 sind an den Gehrungsschnittflächen paßflächig zusammensetzbar und anschließend in eine Aufnahmenut 5 eines Schuhmoduls 1 einsetzbar. Es versteht sich, daß dazu die Verbindung 12 zwischen Bürstensteg 9 und Bürstenschenkeln 7, 8 ausreichend schmal ausgeführt sein muß bzw. der Werkstoff, aus dem die Bürstenrücken der Bürstenschenkel 7, 8 und des Bürstenstegs 9 bestehen, ausreichend verformbar sein muß. Vorzugsweise werden die Bürstenrücken von Bürstensteg 9 und Bürstenschenkeln 7, 8 als einteiliges linear extrudiertes Kunststoff-Formteil hergestellt, das zwei Gehrungsschnittausnehmungen 11 aufweist und an den Gehrungsschnittflächen paßflächig zusammenlegbar und in die Aufnahmenut 5 des zugeordneten Schuhmoduls 1 einpaßbar ist.

Die Bürstenmodule 6 sind in die Aufnahmenuten 5 randabgedichtet einsetzbar. Im Ausführungsbeispiel weist der Nutengrund der Aufnahmenuten 5 Schmiermittelverteilerkanäle 13 auf. Von diesen Schmiermittelverteilerkanälen 13 führen Schmiermittelbohrungen 14 in den Bürstenrücken zu den Borstenbündeln 10. Dabei ist in den Bürstenrücken von Bürstenschenkeln 7, 8 und Bürstensteg 9 jeweils eine Mehrzahl von Schmiermittelbohrungen 14 verteilt, so daß der Schmierstoff den Borstenbündeln in ausreichendem Maße und gleichmäßig zugeführt werden kann. Im Ausführungsbeispiel ist in den Schuhmodulschenkeln 2, 3 sowie in dem Schuhmodulsteg 4 jeweils eine Schmiermittelzuführungsbohrung 15 angeordnet, welche Schmiermittelzuführungsbohrungen 15 mit den Schmiermittelverteilerkanälen 13 in Verbindung stehen. An die Schmiermittelzuführungsbohrungen 15 sind (nicht dargestellte) automatische Schmierstoffgeber anschließbar. Die Schmiermittelzuführungsbohrungen 15 können dazu entsprechende Anschlußgewinde aufweisen. Im montierten Zustand der Bürstenmodule 6 bilden die Schmiermittelverteilerkanäle 13, die Schmiermittelzuführungsbohrungen 15 und die automatischen Schmierstoffgeber ein geschlossenes hydraulisches System, von dem lediglich die Schmiermittelbohrungen 14, die zu den Borstenbündeln 10 führen, ausgehen.

Die Fig. 5 zeigt eine erfindungsgemäße Vorrichtung aus kombinierten Schuhmodulen 1 mit eingesetzten Bürstenmodulen 6. Nach bevorzugter Ausführungsform der Erfindung und im Ausführungsbeispiel weisen die Schuhmodule 1 plan geformte Stoßflächen und in Längsrichtung der Vorrichtung durchlaufende Bohrungen 16 für Verbindungsschrauben 17 auf und sind im Ausführungsbeispiel zu einem Modulpaket von drei Schuhmodulen zusammengesetzt. Es versteht sich, daß im Rahmen der Erfindung Modulpakete aus einer beliebigen Anzahl von Schuhmodulen 1 zusammensetzbar sind. Die Schmiermittelzuführungsbohrungen 15 sind wahlweise durch Stopfenschrauben 18 verschließbar und die entsprechenden Schuhmodule 1 mit den eingesetzten Bürstenmodulen 6 dadurch als Reinigungsbürsten einsetzbar. Im Ausführungsbeispiel (Fig. 5) sind drei Schuhmodule 1 mit eingesetzten Bürstenmodulen 6 zu einer Schmier- und Reinigungsvorrichtung kombiniert. Nur das mittlere Schuhmodul 1 mit Bürstenmodul 6 dient der Schmierung, während die beiden äußeren Schuhmodule 1 mit Bürstenmodulen 6 lediglich zu Reinigungszwecken dienen und keinen Schmierstoff enthalten. Dementsprechend sind die Schmiermittelzuführungsbohrungen 15 dieser beiden äußeren Schuhmodule 1 mit Stopfenschrauben 18 verschlossen.

Die in Längsrichtung der Vorrichtung durchlaufenden Bohrungen 16 können auch als Befestigungseinrichtungen zur Befestigung der Schuhmodule 1 an Antriebseinrichtungen für die Bewegung der erfindungsgemäßen Vorrichtung über eine zu schmierende und/oder zu reinigende Kette oder Schiene dienen. Als Befestigungseinrichtungen können in den Schuhmodulen 1 aber auch Sackbohrlöcher 19 vorgesehen sein. Vorzugsweise und im Ausführungsbeispiel ist an den Modulsteg 4 eines Schuhmoduls 1 ein quaderförmiger Vorsprung 20 angeschlossen. In diesem Vorsprung 20 ist eine Bohrung 16 vorgesehen, die in Längsrichtung einer erfindungsgemäßen Vorrichtung verläuft. Der Vorsprung 20 weist auch die Schmiermittelzuführungsbohrung 15 für den Modulsteg 4 auf, die mit Schmiermittelverteilerkanälen 13 in Verbindung steht. Im Ausführungsbeispiel ist in dem Vorsprung 20 die Schmiermittelzuführungsbohrung 15 senkrecht zu der Bohrung 16 angeordnet und kreuzt diese. Daher kann bei dem Schuhmodul 1 im Ausführungsbeispiel auch die Bohrung 16 in dem Vorsprung 20 als Schmiermittelzuführungsbohrung und für den Anschluß eines automatischen Schmierstoffgebers genutzt werden. Der Vorsprung 20 weist außerdem ein seitliches Sackbohrloch 19 auf, das als Befestigungseinrichtung für den Anschluß des jeweiligen Schuhmoduls 1 an eine Antriebseinrichtung dienen kann, aber auch für die Verbindung mehrerer Schuhmodule 1 hintereinander zu einer erfindungsgemäßen Vorrichtung bzw. für die Verbindung von Schuhmodulen 1 nebeneinander vorgesehen sein kann.

## Patentansprüche

1. Vorrichtung zum Schmieren und Reinigen insbesondere von Ketten und Schienen, - mit
einer Mehrzahl von gleichen Schuhmodulen (1) mit jeweils zwei Modulschenkeln (2, 3) und einem Modulsteg (4), die innenseitig Aufnahmenuten (5) für das Einsetzen von Bürsten aufweisen und mit
einer der Mehrzahl der Schuhmodule (1) entsprechenden Mehrzahl von Bürstenmodulen (6), die zwei Bürstenschenkel (7, 8) und einen Bürstensteg (9) aus jeweils Bürstenrücken und darin eingelassenen Borstenbündeln (10) aufweisen und die in die Aufnahmenut (5) eingepaßt sind,
wobei die Bürstenmodule (6) in die Aufnahmenuten (5) randabgedichtet einsetzbar sind und der Nutengrund der Aufnahmenuten (5) und/oder die Bürstenrücken Schmiermittelverteilerkanäle (13) aufweisen oder bilden, wobei von den Schmiermittelverteilerkanälen (13) in den Bürstenrücken Schmiermittelbohrungen (14) zu den Borstenbündeln (10) führen und in den Schuhmodulschenkeln (2, 3) sowie in dem Schuhmodulsteg (4) Schmiermittelzuführungsbohrungen (15) angeordnet sind, die mit den Schmiermittelverteilkanälen (13) in Verbindung stehen, wobei an die Schmiermittelzuführungsbohrungen (15) automatische Schmierstoffgeber angeschlossen sind, und wobei im montierten Zustand der Bürstenmodule (6) die Schmiermittelverteilerkanäle (13), die Schmiermittelzuführungsbohrungen (15) und die automatischen Schmierstoffgeber ein geschlossenes hydraulisches System bilden, von dem lediglich die Schmiermittelbohrungen (14), die zu den Borstenbündeln (10) führen, ausgehen.

2. Vorrichtung nach Anspruch 1, wobei die Schuhmodule (1) plangeformte Stoßflächen und in Längsrichtung der Vorrichtung durchlaufende Bohrungen (16) für Verbindungsschrauben (17) aufweisen, sowie dadurch zu Modulpaketen aus einer beliebigen Anzahl von Schuhmodulen (1) zusammensetzbar sind.

3. Vorrichtung nach einem der Ansprüche 1 und 2, wobei die Schmiermittelzuführungsbohrungen (15) wahlweise durch Stopfenschrauben (18) verschließbar und die entsprechenden Schuhmodule (1) mit den eingesetzten Bürstenmodulen (6) dadurch als Reinigungsbürsten einsetzbar sind.

4. Vorrichtung nach einem der Ansprüche 1 bis 3, wobei die Schuhmodule (1) als Spritzgußteile aus Metall oder Kunststoff ausgeführt sind.

5. Vorrichtung nach einem der Ansprüche 1 bis 4, wobei die Bürstenrücken von Bürstensteg (9) und Bürstenschenkeln (7, 8) als einteiliges linear extrudiertes Kunststoff-Formteil ausgeführt sind, das zwei Gehrungsschnitt-Ausnehmungen (11) aufweist und an den Gehrungsschnittflächen paßflächig zusammenlegbar ist und in die Aufnahmenut (5) des zugeordneten Schuhmoduls (1) einpaßbar ist.

## Claims

1. A device for lubricating and cleaning chains and rails in particular, - having
a plurality of identical shoe modules (1), each with two module limbs (2, 3) and a module crosspiece (4), which have receiver slots (5) on the inside for the insertion of brushes, and having
a plurality of brush modules (6) which correspond to the plurality of shoe modules (1), which have two brush limbs (7, 8) and a brush crosspiece (9), each comprising brush backs and bristle bundles (10) inserted therein, and which are fitted into the receiver slot (5),
wherein the brush modules (6) can be inserted sealed at their edges in the receiver slots (5) and the slot bases of the receiver slots (5) and/or the brush backs comprise or form lubricant distribution channels (13), wherein lubricant holes (14) lead from the lubricant distribution channels (13) in the brush backs to the bristle bundles (10), and lubricant supply holes (15), which are connected to the lubricant distribution channels (13), are disposed in the shoe module limbs (2, 3) and in the shoe module crosspieces (4), wherein automatic lubricant dispensers are attached to the lubricant supply holes (15), and wherein in the assembled state of the brush modules (6) the lubricant distribution channels (13), the lubricant supply holes (15) and the automatic lubricant dispensers form a closed hydraulic system, from which only the lubricant holes (14) which lead to the bristle bundles (10) issue.

2. A device according to claim 1, wherein the shoe modules (1) have planar abutment faces and holes (16) passing through in the longitudinal direction of the device for fastening screws (17), and can thereby be assembled to form module packages comprising an arbitrary number of shoe modules (1).

3. A device according to either one of claims 1 and 2, wherein the lubricant supply holes (15) can optionally be closed by screw plugs (18) and the corresponding shoe modules (1) with the inserted brush modules (6) can thereby be used as cleaning brushes.

4. A device according to any one of claims 1 to 3, wherein the shoe modules (1) are produced as die-cast or injection moulded components made of metal or plastic.

5. A device according to any one of claims 1 to 4, wherein the brush backs are produced from the brush crosspiece (9) and brush limbs (7, 8) as a one-piece, linearly extruded plastic moulding, which has two mitre cut recesses (11) and which can be folded at the mitre cut faces so that the latter faces fit together, and which can be fitted into the receiver slot (5) of the associated shoe module (1).

## Revendications

1. Dispositif pour la lubrification et le nettoyage, en particulier des chaînes et des rails, comportant:
une pluralité de modules de sabots (1) identiques comportant chacun deux ailes de module (2,3) et une nervure de module (4), lesdits modules de sabots comportant, sur leur côté intérieur, des rainures de réception (5) pour la mise en place de brosses, et comportant
une pluralité de modules de brosses (6), correspondant à la pluralité de modules de sabots (1), comportant deux ailes de brosse (7,8) et une nervure de brosse (9) sur chaque dos de brosse et des paquets de fils (10) qui y sont disposés et qui sont implantés dans la rainure de réception (5),
les modules de brosse (6) étant aptes à être implantés dans les rainures de réception (5) de façon étanche à leur périphérie, et le fond de rainure des rainures de réception (5) et/ou les dos de brosses comportant ou formant des canaux (13) de répartition de produits de lubrification, des alésages de produits de lubrification (14) conduisant des canaux de répartition de produits de lubrification (13) aux paquets de fils (10), et des alésages (15) d'amenée de produits de lubrification reliés aux alésages d'amenée de produits de lubrification (13) étant disposés dans les ailes (2,3) de modules de sabot ainsi que dans la nervure (4) de module de sabot, des dispenseurs automatiques de produits de lubrification étant reliés aux alésages d'amenée de produits de lubrification (15), et les canaux de répartition (13) des produits de lubrification, les alésages (15) d'amenée de produits de lubrification et les dispensours automatiques de produits de lubrification formant, dans l'état monté des modules de brosse (6), un système hydraulique fermé, duquel partent uniquement les alésages de produits de lubrification (14) menant aux paquets de fils (10).

2. Dispositif selon la revendication 1, dans lequel les modules de sabots (1) comportent des surfaces d'about planes et, dans le sens longitudinal du dispositif, des alésages traversants (16) pour des vis de liaison (17), et peuvent, grâce à eux, être assemblés avec des paquets de modules à partir d'un nombre quelconque de modules de sabot (1).

3. Dispositif selon l'une des revendications 1 ou 2, les alésages (15) d'amenée de produits de lubrification étant, le cas échéant, aptes à être bouchés par des vis bouchon (18) et les modules de sabots (1) correspondants étant, de ce fait, aptes à être utilisés comme brosses de nettoyage avec les modules de brosses (6) implantés.

4. Dispositif selon l'une des revendications 1 à 3, les modules de sabots (1) étant réalisés sous la forme de pièces moulées par injection en métal ou en matière plastique.

5. Dispositif selon l'une des revendications 1 à 4, les dos de brosses étant réalisés par extrusion linéaire à partir de la nervure de brosse (9) et des ailes de brosses (7,8) sous la forme d'une pièce d'un seul tenant en matière plastique, comportant deux ouvertures (11) à coupe en biais et pouvant être pliée le long des surfaces de découpe en biais et pouvant être adaptée dans la rainure de réception (5) du module de sabot (1) associé.
